(19) **Europäisches Patentamt**

**European Patent Office**

**Office européen des brevets**

(11) **EP 1 389 349 B1**

(12) **FASCICULE DE BREVET EUROPEEN**

(45) Date de publication et mention
de la délivrance du brevet:
**29.09.2004 Bulletin 2004/40**

(21) Numéro de dépôt: **02732874.9**

(22) Date de dépôt: **16.05.2002**

(51) Int Cl.⁷: **H01L 41/09**

(86) Numéro de dépôt international:
**PCT/FR2002/001651**

(87) Numéro de publication internationale:
**WO 2002/093728 (21.11.2002 Gazette 2002/47)**

(54) **ACTIONNEUR LINEAIRE, NOTAMMENT ACTIONNEUR POUR FREIN D'AVION**

**LINEARER AKTUATOR, INSBESONDERE AKTUATOR FÜR FLUGZEUGBREMSEN**

**LINEAR ACTUATOR, PARTICULARLY AN AIRCRAFT BRAKE ACTUATOR**

(84) Etats contractants désignés:
**DE ES FR GB IT**

(30) Priorité: **16.05.2001 FR 0106440**

(43) Date de publication de la demande:
**18.02.2004 Bulletin 2004/08**

(73) Titulaire: **SAGEM SA**
**75015 Paris (FR)**

(72) Inventeurs:
• **AUDREN, Jean-Thierry**
**F-78470 SAINT-REMY-LES-CHEVREUSE (FR)**
• **SZEBESTA, Patrick**
**F-27220 L'HABIT (FR)**

(74) Mandataire: **Callon de Lamarck, Jean-Robert et al**
**Cabinet Régimbeau**
**20, rue de Chazelles**
**75847 Paris cedex 17 (FR)**

(56) Documents cités:
**FR-A- 2 782 420**

• **PATENT ABSTRACTS OF JAPAN vol. 2000, no. 20, 10 juillet 2001 (2001-07-10) & JP 2001 086700 A (ASMO CO LTD), 30 mars 2001 (2001-03-30) cité dans la demande -& JP 2001 086700 A (ASMO CO LTD) 30 mars 2001 (2001-03-30)**

## Description

La présente invention est relative aux actionneurs linéaires.

Elle trouve notamment avantageusement - mais non limitativement - application dans le domaine des freins, notamment des freins d'avions.

Les freins d'avion sont aujourd'hui actionnés à l'aide de pistons hydrauliques.

Ces actionneurs présentent toutefois des inconvénients liés à l'utilisation d'un fluide hydraulique : risques de fuites, nécessité d'un générateur de pression, etc...

Pour des raisons de coût, de sécurisation et de limitation de pollution, on cherche à remplacer ces actionneurs hydrauliques par des actionneurs électriques.

Il a notamment déjà été proposé différentes solutions sur la base de moteurs électromagnétiques.

Généralement, le mouvement du moteur est transmis à un piston au travers d'une chaîne de pignons et d'une vis transformant le mouvement rotatif en mouvement rectiligne.

Ce mécanisme est réversible afin qu'en cas de perte d'alimentation électrique le frein ne reste pas serré.

La démultiplication importante faite par les pignons sert à obtenir une force élevée sans demander au moteur un couple trop important.

Une telle structure à pignons de démultiplication permet de minimiser la masse et le coût du moteur.

Malgré cela, les freins électromécaniques qui ont été réalisés ou proposés présentent encore des masses trop élevées.

De plus la démultiplication importante associée à l'inertie du rotor du moteur provoque pour les fréquences de commande élevées (phase d'approche de l'actionneur et asservissement de l'antiblocage) une consommation d'énergie très importante sans commune mesure avec l'énergie réellement nécessaire au serrage de disques.

On connaît par ailleurs déjà, notamment par les demandes de brevet FR 97-10948, FR 98-10391 et FR 00-03084 de la demanderesse, des structures de moteurs électriques dits à vibrations qui présentent l'avantage de permettre de délivrer des couples élevés et de présenter, à puissance équivalente, des masses particulièrement faibles.

Toutefois, les moteurs à vibrations ont l'inconvénient de se bloquer en cas de coupure d'alimentation, ce qui est a priori difficilement compatible avec une utilisation dans les dispositifs de freins, notamment de freins d'avions, puisqu'il est habituellement requis pour ce type d'application de pouvoir totalement relâcher les freins par une simple coupure de leur alimentation, ceci notamment pour éviter les freinages fortement dissymétriques à l'atterrissage.

On connaît par ailleurs par demande de brevet japonais 2001-086 700 un actionneur linéaire qui comporte un moteur à vibrations et un électro-aimant.

La structure proposée dans ce document présente l'inconvénient de présenter des courses d'actionnement particulièrement faibles. Elle reste d'une masse et d'une inertie importante.

## PRESENTATION DE L'INVENTION

L'invention propose quant à elle une structure d'actionneur, notamment d'actionneur de frein, qui est de type électrique mais permet des masses et des consommations particulièrement faibles.

Notamment, elle propose une structure d'actionneur qui utilise, à la place d'un moteur électromagnétique un moteur du type à vibrations, ce qui permet :

- d'une part de délivrer un couple élevé à basse vitesse, et par conséquent d'éliminer les pignons (gain de masse) et de réduire l'inertie apparente (gain de consommation),
- d'autre part un gain de masse important.

La structure proposée permet de relâcher totalement l'actionneur lorsque l'alimentation électrique est coupée.

Elle présente l'avantage de permettre une course d'actionnement importante apte notamment à compenser l'usure des disques de frein.

L'invention propose en outre une structure d'actionneur qui en plus de la fonction "frein de service" est apte à assurer également la fonction frein de parc.

Ainsi l'invention propose un actionneur linéaire comportant un corps sur lequel sont montés un piston et un moteur électrique rotatif, ainsi que des moyens qui sont interposés entre le moteur électrique et le piston et qui définissent une chaîne mécanique qui transforme le mouvement de rotation du moteur en un déplacement linéaire dudit piston, le moteur électrique étant un moteur du type à vibrations comportant au moins un stator et un rotor et des moyens d'excitation pour déformer ledit stator et/ou ledit rotor selon des modes vibratoires combinant des vibrations tangentielles et des vibrations normales destinées à entraîner en rotation le rotor, les moyens interposés entre le moteur électrique et le piston comportant des moyens qui désaccouplent mécaniquement ledit piston et ledit moteur électrique lorsque l'alimentation électrique de celui-ci est coupée, lesdits moyens comportant un électro-aimant apte à maintenir une pièce polaire complémentaire dans une position donnée lorsqu'il est alimenté, caractérisé en ce que le piston est solidaire d'une jupe apte à coulisser sur le corps pour guider le piston dans son déplacement axial, et l'électro-aimant et/ou la pièce polaire agissent sur une pièce qui se bloque par friction sur la jupe de guidage solidaire du piston ou au contraire s'en désengage selon que l'électro-aimant est ou non alimenté.

Un tel actionneur est avantageusement complété par les différentes caractéristiques suivantes prises seules ou selon toutes leurs combinaisons possibles :

- la pièce qui se bloque par friction sur une jupe de guidage solidaire du piston est une pièce en forme générale de cloche qui présente d'une part une partie formant pied solidaire de l'une ou l'autre des deux pièces que constituent l'électro-aimant ou la pièce polaire, d'autre part une partie formant dôme qui est solidaire de l'autre de ces deux pièces et qui constitue un ressort qui lorsque l'électro-aimant est alimenté et que la pièce polaire est plaquée sur celui-ci repousse une partie intermédiaire entre la partie formant dôme et la partie formant pied pour bloquer par friction cette partie intermédiaire et l'ensemble de la pièce en cloche sur la jupe de guidage solidaire du piston ;

- l'électro-aimant est apte à être déplacé axialement vers le piston par un élément qui présente un filetage qui engrène avec le filetage d'une pièce formant écrou qui est elle-même entraînée en rotation par le moteur à vibrations, l'actionnement du moteur à vibrations entraînant en déplacement axial la pièce qui engrène avec la pièce formant écrou et l'électro-aimant ;

- l'élément qui présente un filetage qui engrène avec le filetage de la pièce formant écrou pour entraîner en déplacement axial l'électroaimant, est un élément creux dans lequel est reçu un ressort comprimé avec une précontrainte minimum entre d'une part un fond que présente ledit élément creux et d'autre part une pièce qui est apte à coulisser dans ledit élément creux et à venir en appui sur l'électroaimant, l'actionneur comportant des moyens pour le cas échéant commandes le moteur à vibrations pour exercer un effort supérieur à la précontrainte du ressort ;

- l'électro-aimant, la pièce polaire, l'élément qui engrène avec la pièce formant écrou sont traversés axialement par une tige qui se termine par une portée apte à venir en appui sur la pièce polaire, cette tige présentant un filetage externe qui coopère avec un filetage complémentaire que présente la pièce formant écrou, un second moteur rotatif étant apte à entraîner ladite tige en rotation et ainsi, par coopération de son filetage avec le filetage complémentaire que présente la pièce formant écrou, à l'entraîner en déplacement axial ;

- la jupe de guidage et la partie intermédiaire de la pièce en forme de cloche qui est destinée à se bloquer par friction sur ladite jupe de guidage sont revêtues d'un couple de couches de friction présentant des coefficients de frottement statiques et dynamiques qui, pour une contrainte entre la chemise et le piston inférieure à 100 MPa, sont supérieurs à 0,6, ledit couple de couches de friction présentant en outre des états de surface tels que :

leur rayon de courbure d'aspérités R vérifient

$0.005mm<<R<<1mm$, et

les longueurs d'onde arithmétique moyenne $\lambda_a$ et quadratique moyenne $\lambda_q$ des aspérités vérifient

$0.5\mu m<\lambda_a$ et $\lambda_q<10\mu m$.

- la partie formant dôme fait un angle de 0.5° ou inférieur par rapport à un plan perpendiculaire à l'axe du piston ;

- la partie formant pied de la pièce en forme de cloche est reliée à la partie intermédiaire formant zone de friction par une portion sensiblement au voisinage du cône de frottement ;

- il comporte une bague qui entoure la jupe de guidage au voisinage immédiat de sa zone destinée à être sollicitée par la pièce en forme de cloche ;

- il comporte des moyens formant ressort qui maintiennent ladite bague dans la hauteur de la jupe de guidage ;

- il comporte des disques de friction et un actionneur selon l'une des revendications précédentes ;

## PRESENTATION DES FIGURES

- la figure 1 est une représentation en vue en coupe illustrant un mode de réalisation possible de l'invention ;

- la figure 2 est une représentation en perspective illustrant ce mode de réalisation ;

- la figure 3 est une représentation schématique de la pièce formant cloche de l'actionneur des figures 1 et 2, avec l'électro-aimant et la pièce polaire qui lui est associé ;

- la figure 4 est une autre représentation schématique de la pièce formant cloche de l'actionneur des figures 1 et 2, avec l'électro-aimant, la pièce polaire qui lui est associée ;

- les figures 5a et 5b sont des représentations schématiques illustrant un détail de réalisation complémentaire possible pour l'invention, la jupe de guidage, l'électro-aimant, la pièce polaire et la pièce formant cloche étant représentés sur ces figures d'une part dans le cas où l'électro-aimant n'est pas alimenté (figure 5a) et d'autre part dans le cas où l'électro-aimant est alimenté (figure 5b).

## DESCRIPTION D'UN OU PLUSIEURS MODES DE REALISATION DE L'INVENTION

### Structure de l'actionneur

L'actionneur qui est représenté sur les figures comporte un corps principal 1 de forme général cylindrique et un piston 2 qui est destiné à être déplacé axialement par rapport audit corps 1, en étant guidé en déplacement axial par rapport à celui-ci par une jupe cylindrique 3. Cette jupe 3 de guidage est apte à coulisser sur ledit corps 1 et se termine par le piston 2.

Dans le cas par exemple où cet actionneur est utilisé comme actionneur de frein d'aéronef, le piston 2 est destiné d'une part à être déplacé pour rattraper les jeux éventuels par rapport à un ensemble de disques de friction auquel ledit actionneur est associé et d'autre part à exercer sur ces disques un effort tendant à les écraser les uns sur les autres pour réaliser le freinage.

L'actionneur qui est représenté sur les figures comporte en outre un moteur à vibrations 4 qui est monté sur le corps 1, coaxialement à celui-ci.

Ce moteur 4 est en particulier avantageusement du type de ceux décrits dans les demandes de brevets FR 97 10948, FR 98 10391 et FR 00 03084 de la demanderesse. Il comporte notamment au moins un disque de rotor disposé entre deux disques de stator, ainsi que des éléments actifs de déformation tangentielle et normale qui sont excités de façon à déformer les disques de stator selon des séquences de fonctionnement qui entraînent en rotation le ou les disques de rotor.

Ces éléments actifs sont avantageusement de type piézoélectriques.

L'actionneur comporte également un écrou 5 qui s'étend à travers les disques formant rotor et stator pour ledit moteur 4, coaxialement à ceux-ci.

Cet écrou 5 présente un filetage intérieur qui coopère avec le filetage externe d'un élément 6 coaxial de forme cylindrique, la coopération dudit écrou 5 et dudit élément 6 coaxial permettant de transformer le mouvement de rotation du rotor du moteur 4 en un mouvement de translation le long de l'axe général de l'actionneur.

A cet effet, cet écrou 5 est solidaire en rotation du ou des disques du rotor du moteur 4 et est maintenu axialement par rapport au corps 1 de l'actionneur à l'aide de butées 7 qui autorisent sa rotation dans le corps 1 et qui résistent aux efforts de réactions colinéaires à l'axe.

L'élément 6 de forme cylindrique est un élément creux qui présente un fond 6a et un corps cylindrique 6b.

Il reçoit un ressort 8, qui est comprimé entre le fond 6a et une pièce 9, qui termine l'élément creux 6 à son extrémité opposée audit fond 6a.

Cette pièce 9 est apte à être rentrée par coulissement dans l'élément creux 6 lorsqu'un effort suffisant pour s'opposer à l'effort du ressort est exercé sur ladite pièce 9.

En l'absence d'un tel effort, cette pièce est repoussée dans une position où elle est bloquée par des butées que présente l'élément 6 et où elle est solidaire à la fois en translation et en rotation par rapport à celui-ci.

Par ailleurs, l'ensemble constitué par l'écrou 5, l'élément , le ressort 8 et la pièce 9 est traversé par une tige intérieure 10 qui se termine par une portée 10a en T.

Une pièce polaire 13 est montée coulissante sur cette tige 10 et est apte à venir en butée sur la portée 10a. Cette pièce polaire 13 coopère avec un électroaimant 12 également monté coulissant par rapport à la tige 10.

Une pièce 11 en forme de cloche est montée entre d'une part l'électro-aimant 12 et d'autre part la pièce polaire 13.

Cette pièce 11 en forme de cloche présente :

- une partie 11a annulaire qui est destinée être repoussée contre la paroi intérieure de la jupe cylindrique 3 et qui constitue une zone destinée à bloquer par friction la jupe cylindrique 3 et le piston 2 par rapport à ladite pièce 11,
- une partie 11b qui constitue le pied de ladite pièce 11 en forme de cloche et qui est prolongée par la partie 11a qui constitue la zone de friction, cette partie 11b étant solidaire d'un électroaimant 12 qui est apte à coulisser axialement par rapport au corps 1,
- une partie 11c formant dôme, qui prolonge la partie annulaire de friction 11a à son extrémité opposée à la partie 11b formant pied, cette partie 11c formant dôme étant une portion déformable constituant un ressort qui selon sa position par rapport à la partie 11b formant pied est apte soit à exercer un effort élastique radial sur la partie 11a de friction - cet effort bloquant alors la jupe 3 et le piston 2 par rapport à la pièce 11 -, soit à relâcher ladite partie 11a pour la désengager par rapport à la paroi intérieure de la jupe 3.

Cette partie 11c formant dôme est rendue solidaire de la pièce polaire 13, par exemple à l'aide de vis.

Lorsque l'électro-aimant 12 est alimenté, il est apte à maintenir la pièce polaire collée sur lui-même, la partie 11c formant dôme étant sollicitée pour bloquer la jupe 3 et le piston 2 par rapport à l'ensemble que constitue l'électro-aimant 12 et la pièce polaire 13.

Par ailleurs, la tige 10 traverse le fond 6a de la pièce filetée 6 au niveau d'un orifice que ledit fond 6a présente, cet orifice définissant un manchon fileté intérieurement dont le filetage coopère avec un filetage externe complémentaire que la tige 10 présente.

Ladite tige 10 est en outre elle-même apte à être entraînée en rotation autour de son axe par un second moteur 14 qui l'entraîne grâce à des cannelures.

Ce moteur est de préférence un moteur à vibrations du type de ceux décrits dans les demandes précitées.

On a également représenté sur la figure un câble d'alimentation C destiné à assurer l'alimentation électrique à la fois du moteur 4, de l'électroaimant 12 et du second moteur 14.

## Fonctionnement

Le fonctionnement de la structure qui vient d'être décrite est le suivant.

### Phase de préparation.

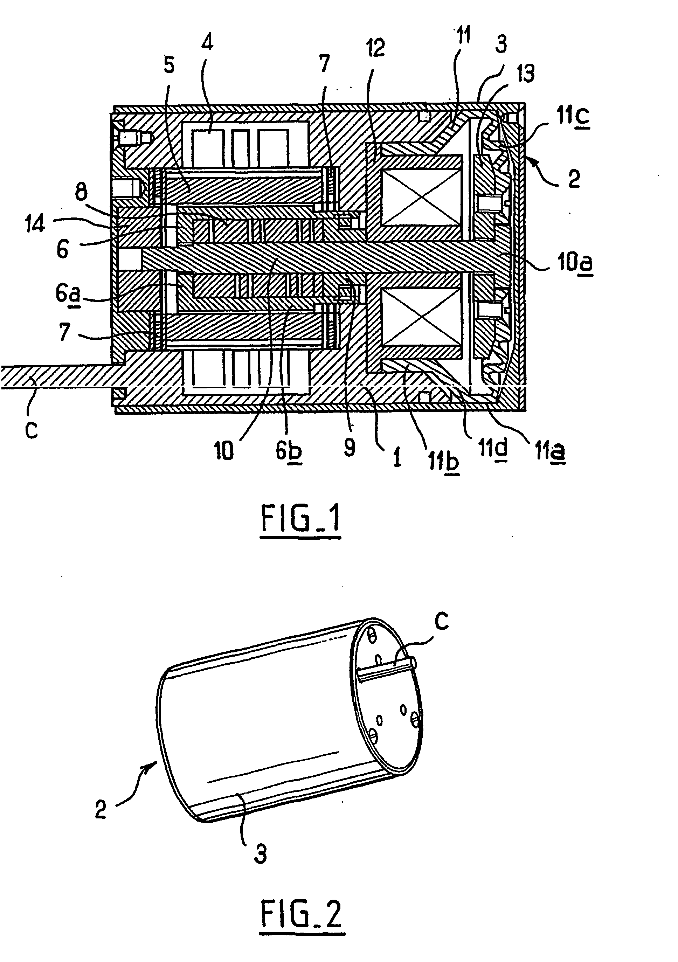

Au repos le dispositif est tel que représenté sur la figure 1.

Pour préparer l'actionneur, le moteur principal 4 est actionné de manière à déplacer la pièce 6 vers l'arrière de l'actionneur, c'est à dire vers le second moteur 14 dans l'exemple illustré sur les figures.

Dans un premier temps, cette pièce 6 entraîne dans son déplacement axial la tige 10, la pièce polaire 13 et la pièce 11 et par conséquent l'électro-aimant 12.

Lorsque l'électroaimant 12 est en butée dans le fond du logement dans lequel il est reçu dans le corps 1, la pièce polaire 13 se rapproche dudit électro-aimant 12, de sorte que la partie 11b formant dôme se déforme et que la partie annulaire de friction 11a vient se bloquer contre la paroi interne de la jupe de guidage 3.

Le courant est alors installé dans l'électroaimant 12, ce qui bloque la pièce polaire 13 et l'électro-aimant 12 l'un sur l'autre et assure le maintien du blocage de la pièce 11 par rapport à la jupe de guidage 3 et au piston.

Le moteur 4 est alors actionné en sens inverse, ce qui dégage la portée 10a de la tige 10 par rapport à la pièce polaire 13 et à l'électro-aimant 12.

L'actionneur est alors prêt à être utilisé : grâce au blocage réalisé par la partie annulaire 11a, tous les mouvements transmis par la pièce 6 à l'électro-aimant 12 sont transmis au piston 2.

### Freinage de service

Notamment, pour réaliser un freinage de service, on actionne le moteur 4. Une fois que la pièce 6 a rattrapé son jeu et vient en appui sur l'électro-aimant 12, elle déplace axialement le piston jusqu'à le mettre en appui sur les disques de friction du frein ; le moteur 4 est alors actionné pour exercer un couple qui écrase les disques et assure le freinage.

L'appui de l'électro-aimant 12 sur la pièce 6 est conservé même lorsque ladite pièce 6 recule et ce tant que les disques de frein sont en pression.

On notera que lors d'une perte intempestive de l'énergie électrique pendant le freinage, l'électroaimant 12 et la pièce polaire 13 sont libérés l'un par rapport à l'autre.

La pièce 11 n'est plus en tension et le piston 2 n'est plus bloqué par rapport à l'électro-aimant 12 et à la pièce 6.

Par conséquent, la structure proposée permet de libérer immédiatement le système de freinage en cas de coupure de l'énergie électrique.

### Frein de parc

Pour réaliser la fonction frein de parc, la séquence de frein de service décrite ci-dessus est déroulée.

Toutefois, le moteur 4 est commandé pour réaliser un serrage des freins correspondant à un effort supérieur à celui du frein de service.

Cet effort surpasse la précontrainte du ressort 8 se trouvant à l'intérieur de la pièce 6, de sorte que la pièce 9 rentre dans la pièce 6 et comprime un peu plus le ressort, permettant à celui-ci de se détendre tout en conservant l'effort de presse en cas de contraction des disques due à leur refroidissement.

Le moteur 14 est alors actionné pour faire reculer la portée 10a jusqu'à ce qu'elle soit en contact avec la pièce polaire 13.

Le courant dans l'électroaimant 12 peut alors être coupé sans que le piston ne se désaccouple dudit électroaimant 12.

De cette façon, le serrage de frein réalisé par l'actionneur est maintenu après coupure de l'alimentation électrique.

Le ressort 8 permet de maintenir constante la force de serrage, même en cas de rétractation des disques de friction de frein, du fait de leur refroidissement.

Pour enlever le frein de parc il suffit ensuite de réaliser la séquence inverse : alimentation de l'électroaimant 12, désengagement de la portée 10a par rapport à la pièce polaire 13 par actionnement du moteur 14, puis coupure de l'alimentation de l'électro-aimant 12.

### Compléments sur des détails de réalisation

On donne ci-après des détails sur des modes de réalisation complémentaires avantageux.

### Coefficient de frottement piston/électroaimant

Afin de travailler avec des efforts minimaux, ce qui permet de réduire la masse des pièces et la consommation de l'électroaimant, il est préférable de disposer au niveau du contact entre la jupe 3 et la pièce 11 de matériaux au coefficient de frottement le plus élevé possible.

De tels matériaux sont avantageusement du type de ceux envisagés dans la demande de brevet FR 01 00524 de la demanderesse.

Les couches de contact sur la jupe 3 et la pièce 11 sont en effet avantageusement constituées de couples de couches de friction présentant des coefficients de frottement statiques et dynamiques qui, pour une contrainte entre la chemise et le piston inférieure à 100 MPa, sont supérieurs à 0,6, ledit couple de couches de friction présentant en outre des états de surface tels que :

- leur rayon de courbure d'aspérités R vérifient

0.005mm<<R<<1mm, et
- les longueurs d'onde arithmétique moyenne $\lambda_a$ et quadratique moyenne $\lambda_q$ des aspérités vérifient $0.5\mu m < \lambda_a$ et $\lambda_q < 10\mu m$.

Pour des exemples de couples de matériaux en ce sens, on pourra avantageusement se référer à la demande de brevet précitée.

*Conception de partie 11b formant dôme/ressort*

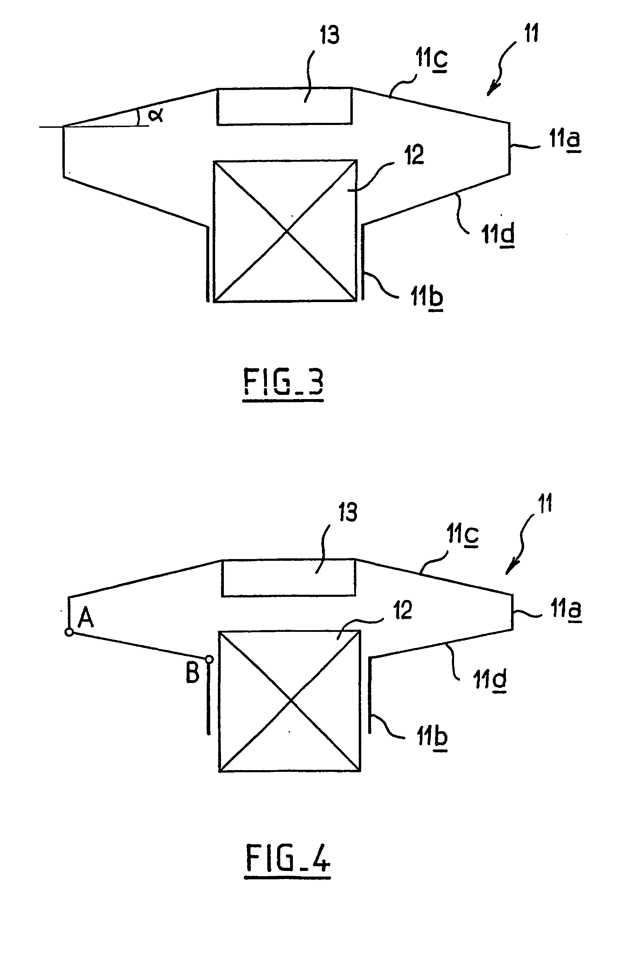

La force d'expansion nécessaire au fonctionnement de la partie formant dôme 11b et à la mise en tension de la partie annulaire 11a est donnée par la charge maximale sur le piston et le coefficient de frottement. Pour que cela ne se traduise pas par une force importante à maintenir par l'électroaimant, on conçoit le système pour que l'angle $\alpha$ (figure 3) d'inclinaison de la partie formant dôme 11b par rapport à un plan perpendiculaire à l'axe de l'actionneur soit aussi petit que possible, sans toutefois devenir négatif ce qui ne permettrait plus au dispositif de se libérer lors d'une coupure d'alimentation.

A titre d'exemple, on prend :
$F_{max}$=20000 N (piston)

Si K est le coefficient de frottement K, la force développée par l'électro-aimant doit être égale à :

$$F_e = \frac{F_{max}}{K}\, x \sin\alpha$$

soit pour K =0,5 et $\alpha$ =0,50°, $F_e$=400N

*Conception de la pièce 11*

Par ailleurs, la forme de la pièce 11 est plus particulièrement de la portion 11d qui relie la partie 11c formant pied à la partie annulaire 11a de friction est choisie pour favoriser un arc-boutement partiel qui minimise la force nécessaire exercée par la membrane.

Ainsi que l'illustre la figure 4, plus cette partie 11d (segment AB) se rapproche de la normale, plus le système s'arc-boute ; lorsque le segment AB se trouve sur le bord du cône de frottement la force à exercer par l'électroaimant s'annule mais le dispositif peut rester coincé à la moindre variation du coefficient de frottement.

On choisira donc l'inclinaison de la zone 11d par rapport à la normale au piston de façon à être au plus près du cône de frottement, tout en restant toujours à l'extérieur quelques soient les variations.

A titre d'exemple, pour un cône nominal de frottement correspondant à un angle de demi-ouverture de 45°, un cône maximal de frottement correspondant à un angle de demi ouverture de 55°, on choisira avantageusement l'orientation de la partie 11d de façon à ce qu'elle corresponde à un angle par rapport à la normale de 60°, soit 55°+5°, où 5° est une marge supplémentaire que l'on se donne.

Avec l'exemple donné précédemment (force de maintien de 400N), ceci permet de réduire la force à développer par l'électro-aimant à un intervalle compris entre 40 et 120N.

*Bague de renfort du piston.*

Par ailleurs, la pièce 11 qui s'appuie sur le piston peut du fait des efforts importants déformer ce dernier.

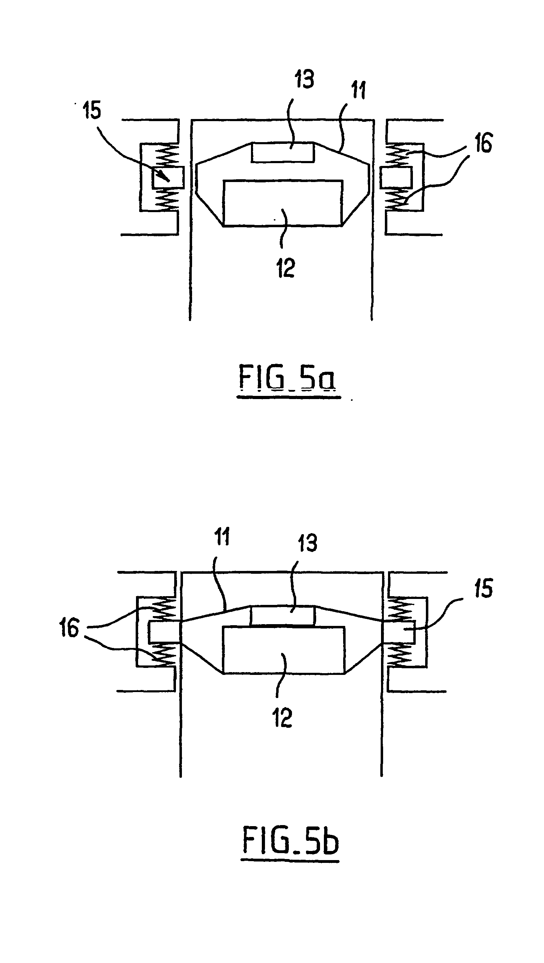

Pour cela, on peut être amené à placer à l'extérieur du piston une bague 15 coulissante au droit de l'appui de ladite pièce 11. Ainsi que l'illustrent les figures 5a et 5b, cette bague 15 est avantageusement maintenue en place axialement entre deux ressorts 16 de faible raideur qui exercent sur ladite bague des efforts axiaux.

Une telle disposition permet d'éviter que la bague ne gène le déplacement du piston.

Lorsque la pièce 11 se gonfle à l'intérieur de la jupe de guidage 3, celle-ci se déforme et vient se bloquer dans la bague 15 (figure 5b).

Par contre, lorsque l'électroaimant 13 est relâché la jupe 3 coulisse dans la bague 15.

**Revendications**

1. Actionneur linéaire comportant un corps (1) sur lequel sont montés un piston (2) et un moteur électrique rotatif (4), ainsi que des moyens (5,6) qui sont interposés entre le moteur électrique et le piston et qui définissent une chaîne mécanique qui transforme le mouvement de rotation du moteur en un déplacement linéaire dudit piston, le moteur électrique étant un moteur du type à vibrations comportant au moins un stator et un rotor et des moyens d'excitation pour déformer ledit stator et/ou ledit rotor selon des modes vibratoires combinant des vibrations tangentielles et des vibrations normales destinées à entraîner en rotation le rotor, les moyens interposés entre le moteur électrique et le piston comportant des moyens qui désaccouplent mécaniquement ledit piston et ledit moteur électrique lorsque l'alimentation électrique de celui-ci est coupée, lesdits moyens comportant un électro-aimant (12) apte à maintenir une pièce polaire (13) complémentaire dans une position donnée lorsqu'il est alimenté, **caractérisé en ce que** le piston est solidaire d'une jupe (3) apte à coulisser sur le corps pour guider le piston dans son déplacement axial, et l'électro-aimant et/ou la pièce polaire agissent sur une pièce (11) qui se bloque par friction sur la jupe de guidage (3) solidaire du piston ou au contraire s'en désengage selon que l'électro-aimant est ou non alimenté.

**2.** Actionneur linéaire selon la revendication 1, **caractérisé en ce que** la pièce (11) qui se bloque par friction sur une jupe de guidage (3) solidaire du piston est une pièce en forme générale de cloche qui présente d'une part une partie formant pied (11b) solidaire de l'une ou l'autre des deux pièces que constituent l'électro-aimant ou la pièce polaire, d'autre part une partie formant dôme (11c) qui est solidaire de l'autre de ces deux pièces et qui constitue un ressort qui lorsque l'électro-aimant est alimenté et que la pièce polaire est plaquée sur celui-ci repousse une partie intermédiaire (11a) entre la partie formant dôme et la partie formant pied pour bloquer par friction cette partie intermédiaire et l'ensemble de la pièce en cloche sur la jupe de guidage solidaire du piston.

**3.** Actionneur selon la revendication 2, **caractérisé en ce que** l'électro-aimant est apte à être déplacé axialement vers le piston par un élément (6) qui présente un filetage qui engrène avec le filetage d'une pièce formant écrou (5) qui est elle-même entraînée en rotation par le moteur à vibrations, l'actionnement du moteur à vibrations entraînant en déplacement axial la pièce qui engrène avec la pièce formant écrou et l'électro-aimant.

**4.** Actionneur selon la revendication 3, **caractérisé en ce que** l'élément (6) qui présente un filetage qui engrène avec le filetage de la pièce formant écrou (5) pour entraîner en déplacement axial l'électroaimant, est un élément creux dans lequel est reçu un ressort (8) comprimé avec une précontrainte minimum entre d'une part un fond (6a) que présente ledit élément creux et d'autre part une pièce (9) qui est apte à coulisser dans ledit élément creux et à venir en appui sur l'électroaimant, l'actionneur comportant des moyens pour le cas échéant commander le moteur à vibrations pour exercer un effort supérieur à la précontrainte du ressort.

**5.** Actionneur selon l'une des revendications 3 ou 4, **caractérisé en ce que** l'électro-aimant, la pièce polaire, l'élément qui engrène avec la pièce formant écrou sont traversés axialement par une tige (10) qui se termine par une portée (10a) apte à venir en appui sur la pièce polaire, cette tige présentant un filetage externe qui coopère avec un filetage complémentaire que présente la pièce formant écrou, un second moteur rotatif (14) étant apte à entraîner ladite tige en rotation et ainsi, par coopération de son filetage avec le filetage complémentaire que présente la pièce formant écrou, à l'entraîner en déplacement axial.

**6.** Actionneur selon l'une des revendications 2 à 5, **caractérisé en ce que** la jupe de guidage (3) et la partie intermédiaire (11a) de la pièce en forme de cloche qui est destinée à se bloquer par friction sur ladite jupe de guidage sont revêtues d'un couple de couches de friction présentant des coefficients de frottement statiques et dynamiques qui, pour une contrainte entre la chemise et le piston inférieure à 100 MPa, sont supérieurs à 0,6, ledit couple de couches de friction présentant en outre des états de surface tels que :

- leur rayon de courbure d'aspérités R vérifient $0.005mm \ll R \ll 1mm$, et
- les longueurs d'onde arithmétique moyenne $\lambda_a$ et quadratique moyenne $\lambda_q$ des aspérités vérifient
  $0.5\mu m < \lambda_a$ et $\lambda_q < 10\mu m$.

**7.** Actionneur selon l'une des revendications 2 à 6, **caractérisé en ce que**, lorsque l'électro-aimant (12) est collé, la partie formant dôme (11c) fait un angle de 0.5° ou inférieur par rapport à un plan perpendiculaire à l'axe du piston.

**8.** Actionneur selon l'une des revendications 2 à 7, **caractérisé en ce que** la partie formant pied (11b) de la pièce en forme de cloche est reliée à la partie intermédiaire (11a) formant zone de friction par une portion sensiblement au voisinage du cône de frottement.

**9.** Actionneur selon l'une des revendications 2 à 8, **caractérisé en ce qu'**il comporte une bague (15) qui entoure la jupe de guidage (3) au voisinage immédiat de sa zone destinée à être sollicitée par la pièce en forme de cloche.

**10.** Actionneur selon la revendication 9, **caractérisé en ce qu'**il comporte des moyens (16) formant ressort qui maintiennent ladite bague (15) dans la hauteur de la jupe de guidage.

**11.** Frein, notamment d'aéronef, **caractérisé en ce qu'**il comporte des disques de friction et un actionneur selon l'une des revendications précédentes.

**Claims**

**1.** A linear actuator comprising a body (1) having a piston (2) and a rotary electric motor (4) mounted thereon, together with means (5, 6) which are interposed between the electric motor and the piston and which define a mechanical system that transforms the rotary movements of the motor into linear displacements of said piston, the electric motor being a vibration type motor comprising at least a stator and a rotor together with excitation means for deforming said stator and/or said rotor in modes of vibration that combine tangential vibration with normal vibration so as to drive the rotor in rotation, the means interposed between the electric motor and the piston including means which mechanically decouple said piston from said electric motor when the electrical power supply thereto is interrupted, said means comprising an electromagnet (12) suitable for holding a complementary pole piece (13) in a given position when it is powered, the actuator being **characterized in that** the piston is secured to a skirt (3) suitable for sliding on the body in order to guide the piston in its axial displacement, the electromagnet and/or the pole piece acting on a part (11) which becomes blocked by friction against the guide skirt (3) which is secured to the piston, or on the contrary becomes disengaged, depending on whether or not the electromagnet is powered.

2. A linear actuator according to claim 1, **characterized in that** the part (11) which becomes blocked by friction against the guide skirt (3) secured to the piston is a part that is generally bell-shaped, presenting firstly a foot-forming portion (11b) secured to one or other of the two parts constituting the electromagnet and the pole piece, and secondly a dome-forming portion (11c) which is secured to the other one of said two parts and which constitutes a spring that, when the electromagnet is powered and the pole piece is pressed thereagainst pushes back an intermediate portion (11a) between the dome-forming portion and the foot-forming portion so as to block said intermediate portion and the bell-forming part as a whole by friction against the guide skirt secured to the piston.

3. An actuator according to claim 2, **characterized in that** the electromagnet is suitable for being displaced axially towards the piston by an element (6) presenting a thread that meshes with the thread of a nut-forming part (5), which is itself driven in rotation by the vibration motor, actuation of the vibration motor causing the part which meshes with the nut-forming part and the electromagnet to be displaced axially.

4. An actuator according to claim 3, **characterized in that** the element (6) presenting a thread which meshes with the thread of the nut-forming part (5) to drive the electromagnet in axial displacement is a hollow element in which there is received a spring (8) that is compressed with some minimum level of prestress between an end wall (6a) presented by said hollow element and a part (9) which is suitable for sliding in said hollow element and for coming into abutment against the electromagnet, the actuator including means for acting, where appropriate, to cause the vibration motor to exert a force that is greater than the prestress of the spring.

5. An actuator according to claim 3 or claim 4, **characterized in that** the electromagnet, the pole piece, and the element which meshes with the nut-forming part have a rod (10) passing axially therethrough which is terminated by a bearing head (10a) suitable for coming into abutment against the pole piece, said rod having an outside thread which co-operates with a complementary thread presented by the nut-forming part, a second rotary motor (14) being suitable for rotating said rod and thus driving it in axial displacement by virtue of its thread co-operating with the complementary thread presented by the nut-forming part.

6. An actuator according to any one of claims 2 to 5, **characterized in that** the guide skirt (3) and the intermediate portion (11a) of the bell-forming part which is designed to become blocked by friction against said guide skirt are coated in a pair of friction layers presenting static and dynamic coefficients of friction which are greater than 0.6 for stress between the skirt and the piston of less than 100 MPa, said pair of friction layers further presenting surface states such that:

   their roughness radii of curvature R satisfy:
   $0.005 \text{ mm} \ll R \ll 1 \text{ mm}$; and
   the arithmetic mean wavelength $\lambda_a$ and the rms wavelength $\lambda_q$ of the roughness satisfy:
   $0.5 \text{ μm} < \lambda_a$ and $\lambda_q < 10 \text{ μm}$.

7. An actuator according to any one of claims 2 to 6, **characterized in that** when the electromagnet (12) is stuck, the dome-forming portion (11c) forms an angle of 0.5° or less relative to a plane perpendicular to the axis of the piston.

8. An actuator according to any one of claims 2 to 7, **characterized in that** the foot-forming portion of the dome-forming part (11b) is connected to the intermediate portion (11a) that forms a friction zone via a portion that lies substantially in the vicinity of the friction cone.

9. An actuator according to any one of claims 2 to 8, **characterized in that** it includes a ring (15) surrounding the guide skirt (3) in the immediate vicinity of its zone that is designed to be engaged by the bell-forming part.

10. An actuator according to claim 9, **characterized in that** it includes spring-forming means (16) which hold said ring (15) in the axial direction relative to the guide skirt.

11. A brake, in particular an aircraft brake, **characterized in that** it includes friction disks and an actuator according to any preceding claim.

**Patentansprüche**

1. Linearer Aktuator, der folgendes umfaßt: ein Gehäuse (1), an dem ein Kolben (2) und ein elektrischer Rotationsmotor (4) montiert sind, sowie Mittel (5, 6), die zwischen den Elektromotor und den Kolben geschaltet sind und die eine mechanische Kette bilden, die die Drehbewegung des Motors in eine lineare Verschiebung des Kolbens umwandelt, wobei der Elektromotor ein Motor vom Vibrationstyp ist, der wenigstens einen Ständer und einen Läufer umfaßt und der Ansteuerungsmittel umfaßt, um den Ständer und/oder den Läufer entsprechend der Vibrationsmodi zu verformen, wobei diese tangentiale Vibrationen und normale Vibrationen kombinieren, die dazu bestimmt sind, den Läufer in Drehung zu versetzen, wobei die zwischen den Elektromotor und den Kolben geschalteten Mittel Mittel umfassen, die den Kolben und den Elektromotor mechanisch auskuppeln, wenn dessen elektrische Versorgung unterbrochen wird, wobei die Mittel einen Elektromagneten (12) umfassen, der dazu geeignet ist, einen komplementären Feldpol (13) in einer gegebenen Position zu halten, wenn er mit Strom versorgt ist, **dadurch gekennzeichnet, daß** der Kolben fest mit einer Schürze (3) verbunden ist, die dazu geeignet ist, auf dem Gehäuse zu gleiten, um den Kolben in seiner axialen Verschiebung zu führen, und der Elektromagnet und/oder der Feldpol auf ein Teil (11) einwirken, das sich durch Reibung auf der fest mit dem Kolben verbundenen Führungsschürze (3) blockiert oder sich im Gegenteil freigibt, je nachdem, ob der Elektromagnet mit Strom versorgt ist oder nicht.

2. Linearer Aktuator nach Anspruch 1, **dadurch gekennzeichnet, daß** das Teil (11), das sich durch Reibung auf einer fest mit dem Kolben verbundenen Führungsschürze (3) blockiert, ein Teil ist, das im wesentlichen eine Glockenform hat, die zum einen einen Abschnitt aufweist, der einen Fuß (11b) bildet, der fest mit dem einen oder dem anderen der beiden durch den Elektromagneten und den Feldpol gebildeten Teile verbunden ist, und zum anderen einen Abschnitt aufweist, der einen Haube (11c) bildet, die fest mit dem anderen dieser beiden Teile verbunden ist und der eine Feder bildet, die, wenn der Elektromagnet mit Strom versorgt ist und der Feldpol auf diesen gedrückt ist, einen Abschnitt (11a) zurückdrückt, der zwischen dem die Haube bildenden Abschnitt und dem den Fuß bildenden Abschnitt liegt, um diesen dazwischenliegenden Abschnitt und die Einheit des glockenförmigen Teils auf der fest mit dem Kolben verbundenen Führungsschürze durch Reibung zu blockieren.

3. Aktuator nach Anspruch 2, **dadurch gekennzeichnet, daß** der Elektromagnet dazu geeignet ist, in Richtung des Kolbens durch ein Element (6) axial verschoben zu werden, das ein Gewinde aufweist, das mit dem Gewinde eines eine Mutter bildenden Teils (5) ineinandergreift, das selbst durch den Vibrationsmotor in Drehung versetzt wird, wobei die Betätigung des Vibrationsmotors das Teil, das mit dem die Mutter bildenden Teil ineinandergreift, und den Elektromagneten axial verschiebt.

4. Aktuator nach Anspruch 3, **dadurch gekennzeichnet, daß** das Element (6), das ein Gewinde aufweist, das mit dem Gewinde des die Mutter bildenden Teils (5) ineinandergreift, um den Elektromagneten axial zu verschieben, ein hohles Element ist, in dem eine zusammengedrückte Feder (8) aufgenommen ist, mit einer minimalen Vorspannung zwischen einem Boden (6a), den das hohle Element aufweist, einerseits und einem Teil (9), das dazu geeignet ist, in dem hohlen Element zu gleiten und auf dem Elektromagnet aufzuliegen, andererseits, wobei der Aktuator Mittel umfaßt, um gegebenenfalls den Vibrationsmotor zu steuern, um eine höhere Kraft als die Vorspannung der Feder auszuüben.

5. Aktuator nach einem der Ansprüche 3 oder 4, **dadurch gekennzeichnet, daß** der Elektromagnet, der Feldpol und das mit dem die Mutter bildenden Teil ineinandergreifende Element axial von einer Stange (10) durchzogen werden, die in einer Verbreiterung (10a) endet, die dazu geeignet ist, am Feldpol aufzuliegen, wobei diese Stange ein äußeres Gewinde aufweist, das mit einem komplementären Gewinde zusammenwirkt, das das die Mutter bildende Teil aufweist, wobei ein zweiter Rotationsmotor (14) dazu geeignet ist, die Stange zu drehen und sie somit durch das Zusammenwirken ihres Gewindes mit dem komplementären Gewinde, das das die Mutter bildende Teil aufweist, axial zu verschieben.

6. Aktuator nach einem der Ansprüche 2 bis 5, **dadurch gekennzeichnet, daß** die Führungsschürze (3) und der dazwischenliegende Abschnitt (11a) des glockenförmigen Teils, der dafür vorgesehen ist sich durch Reibung auf der Führungsschürze zu blockieren, mit einem Paar Reibungsschichten überzogen sind, die Haftreibungskoeffizienten und Gleitreibungskoeffizienten aufweisen, die für eine Belastung zwischen dem Mantel und dem Kolben von weniger als 100 MPa über 0,6 liegen, wobei das Reibungsschichtenpaar außerdem die folgenden Oberflächeneigenschaften aufweist:

   - der Krümmungsradius R der Oberflächenrauhigkeiten erfüllt die Bedingung
        0,005 mm << R << 1 mm, und
   - die mittleren arithmetischen $\lambda_a$ und die mittleren quadratischen $\lambda_q$ Wellenlängen der Ober-

flächenrauhigkeiten erfüllen die Bedingung
$$0{,}5\ \mu m < \lambda_a \text{ und } \lambda_q < 10\ \mu m.$$

7. Aktuator nach einem der Ansprüche 2 bis 6, **dadurch gekennzeichnet, daß** wenn der Elektromagnet (12) angezogen ist, der die Haube bildende Abschnitt (11c) einen Winkel von 0,5° oder kleiner in Bezug auf eine zur Kolbenachse senkrechte Ebene bildet.

8. Aktuator nach einem der Ansprüche 2 bis 7, **dadurch gekennzeichnet, daß** der den Fuß bildende Abschnitt (11b) des glockenförmigen Teils mit dem eine Reibungszone bildenden dazwischenliegenden Abschnitt (11a) durch einen Abschnitt verbunden ist, der sich in etwa in der Nähe des Reibungskegels befindet.

9. Aktuator nach einem der Ansprüche 2 bis 8, **dadurch gekennzeichnet, daß** er eine Hülse (15) umfaßt, die die Führungsschürze (3) in direkter Nähe zu ihrem Bereich umschließt, in dem die Einwirkung des glockenförmigen Teils vorgesehen ist.

10. Aktuator nach Anspruch 9, **dadurch gekennzeichnet, daß** er Mittel (16) umfaßt, die eine Feder bilden, die die Hülse (15) auf der Höhe der Führungsschürze hält.

11. Bremse, insbesondere für Luftfahrzeuge, **dadurch gekennzeichnet, daß** sie Reibscheiben und einen Aktuator gemäß einem der vorhergehenden Ansprüche umfaßt.

FIG.1

FIG.2

13

11c

11

11a

α

12

11d

11b

## FIG_3

13

11c

11

11a

A

12

B

11d

11b

## FIG_4

FIG 5a

FIG.5b